# EUROPEAN PATENT APPLICATION

(11) **EP 4 023 043 A1**
(43) Date of publication of application: **06.07.2022**
(21) Application number: 20858048.0
(22) Date of filing: 18.08.2020
(51) Int. Cl.: A01B 69/00, G08G 1/00

(54) **TRAVELING SUPPORT SYSTEM**

(30) Priority: 28.08.2019 JP 2019155749
(71) Applicant: Yanmar Power Technology Co., Ltd., Osaka-shi Osaka 530-0013 (JP)
(72) Inventor: ISHIKAWA, Akira, Osaka-shi, Osaka 530-0014 (JP)
(74) Representative: Dennemeyer & Associates S.A.
(86) International application number: PCT/JP2020/031163
(87) International publication number: WO 2021/039505

(57) **Abstract**

This traveling support system comprises: a guideline setting unit that sets, in a field (F), a plurality of guidelines (GL) respectively extending in parallel with a plurality of outer peripheries (PL) that divides the field (F); a straight guide line setting unit that sets, in the field (F), a plurality of straight guidance lines (SL) extending in parallel with each other with a distance (D) therebetween; a traveling control unit that automatically advances a work vehicle (2) along the straight guidance lines (SL) and cancels the automatic advancing according to an operation of a steering wheel by an operator to enable the work vehicle (2) to be manually steered; and an operation display unit that superimposes and displays the plurality of guidelines (GL), the plurality of straight guidance lines (SL), and the current position of the work vehicle (2) together with the shape of the field (F).

## Description

### TECHNICAL FIELD

The present invention relates to a traveling support system.

### BACKGROUND ART

Patent Document 1 discloses a technology for assisting a traveling vehicle in a field by automatically making the traveling vehicle move straight ahead on a target straight path set in the field, cancelling the automatic straight-ahead movement when the traveling vehicle reaches an edge of a footpath in the field, and automatically making the traveling vehicle move straight ahead on a target straight path adjacent to the previous target straight path.

In this technology, the automatic straight-ahead movement of the traveling vehicle is immediately cancelled by operation of a steering wheel by an operator driving the traveling vehicle, and the traveling vehicle is turned by operation of the steering wheel by the operator.

### CITATION LIST

### Patent Literature

Patent Document 1: Japanese Unexamined Patent Publication No. 2017-176096

### DISCLOSURE OF INVENTION

### PROBLEMS TO BE SOLVED BY THE INVENTION

When such a technology is used to make a traveling vehicle travel in a field, the following display system is preferably used. A target straight path is displayed on a display that constitutes an operation unit operated by the operator, and the operator decides the timing to turn the traveling vehicle by checking the display. As a result, the timing of the turn is not constant on each target straight path and may differ for each target straight path. In particular, when the shape of the field is not a simple rectangle, it may be difficult to properly turn the traveling vehicle in all target straight paths because the optimal timing of turning differs for each target straight path.

Therefore, an object of the present invention is to provide a traveling support system capable of making the operator recognize an appropriate timing of turning to automatically make the traveling vehicle move straight ahead in the field.

### MEANS FOR SOLVING THE PROBLEMS

In an embodiment of the present invention, a traveling support system is provided, comprising: a guiding line setting unit setting a plurality of guiding lines in a field, the guiding lines respectively extending parallel to a plurality of outer peripheries sectioning the field, a straight guidance line setting unit setting a plurality of straight guidance lines in the field, the straight guidance lines extending parallel to each other at intervals, a traveling control unit automatically making the traveling vehicle move straight ahead along the straight guidance lines and cancelling the automatic straight-ahead movement in response to an operation of an operation unit provided on the traveling vehicle to enable manual steering of the traveling vehicle; and a display unit displaying a plurality of the guiding lines, a plurality of the straight guidance lines, and a current position of the traveling vehicle in a superimposed way together with the shape of the field.

According to this configuration, it is possible to make the operator recognize an appropriate timing of turning when the traveling vehicle is moved straight ahead in the field.

### BRIEF DESCRIPTION OF DRAWINGS

FIG. 1 is a schematic diagram illustrating a configuration of a traveling support system according to an embodiment of the invention.
FIG. 2 is a schematic diagram for explaining how the work vehicle included in the traveling support system travels inside a field.
FIG. 3 is a block diagram illustrating the electrical configuration of the traveling support system.
FIG. 4 is a schematic diagram showing guiding lines and straight guidance lines set in the field.
FIG. 5A is a schematic diagram of an image displayed on a display of a traveling support device provided in a work support system when the work vehicle travels in the field.
FIG. 5B is a schematic diagram of an image displayed on a display of the traveling support device when the work vehicle travels in the field.
FIG. 5C is a schematic diagram of an image displayed on a display of the traveling support device when the work vehicle travels in the field.
FIG. 5D is a schematic diagram of an image displayed on a display of the traveling support device when the work vehicle travels in the field.
FIG. 5E is a schematic diagram of an image displayed on a display of the traveling support device when the work vehicle travels in the field.
FIG. 6 is a schematic diagram of the field in which a plurality of guiding lines are set for each outer periphery.

### DESCRIPTION OF EMBODIMENTS

Hereinafter, embodiments of the invention will be described in detail with reference to the accompanying drawings.

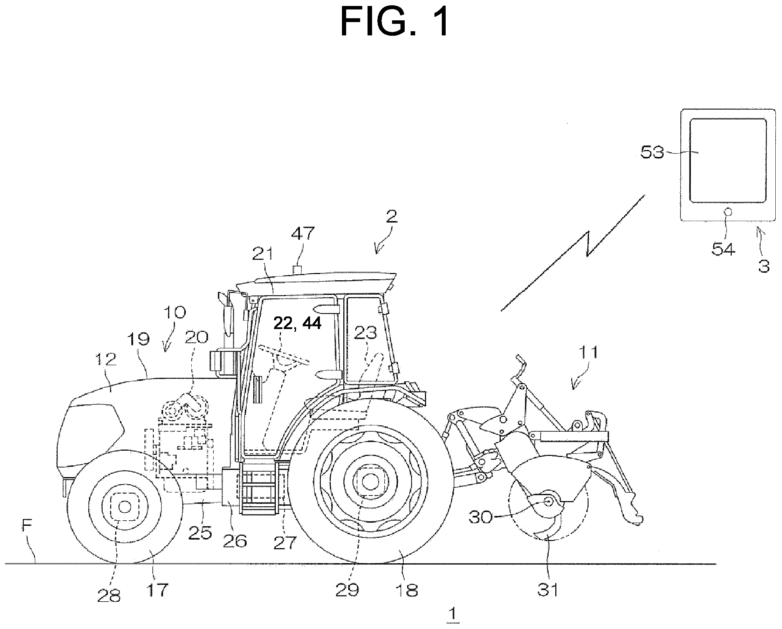

FIG. 1 is a schematic diagram illustrating a configuration of a traveling support system according to an embodiment of the invention. Referring to FIG. 1, a traveling support system 1 is a system for supporting traveling of a work vehicle 2 in a field F.

The traveling support system 1 comprises a work vehicle 2 capable of working while traveling in the field F, and a traveling support device 3 for supporting traveling of the work vehicle 2. The work vehicle 2 is capable of wireless communication with the traveling support device 3 by WiFi or the like. The traveling support device 3 can be operated by the operator driving (operating) the work vehicle 2.

In this specification, the work vehicle 2 includes a work vehicle consisting of a traveling machine and the work machine towed by the traveling machine, and a work vehicle in which the traveling machine and the work machine are integrated.

The work vehicle 2 includes, for example, a traveling machine 10 (traveling vehicle) and a work machine 11 towed by the traveling machine 10. In this embodiment, the traveling machine 10 is a tractor. As a work machine 11, for example, a fertilizer spreader (fertilizing machine), an agricultural chemical spreader, a roll baler, a cultivator, a plow, a leveler, a mower, a seeding machine, a harvester, and the like are listed. In this embodiment, the work machine 11 is a cultivator.

As a work vehicle in which the traveling machine and the work machine are integrated, for example, a rice transplanter, or a combine harvester, and the like are listed.

The traveling machine 10 comprises a traveling machine body 12 on which the work machine 11 is mounted. The front part of the traveling machine body 12 is supported by a right and left pair of front wheels 17, and the rear part of the traveling machine body 12 is supported by a right and left pair of rear wheels 18.

On the front part of the traveling machine body 12, a hood 19 is arranged. Inside the hood 19, an engine 20 as a driving source for the traveling machine 10 and a fuel tank (not shown) are housed.

Behind the hood 19, a cabin 21 which the operator is to get into is arranged. Inside the cabin 21, a seat 23 on which the operator can get seated and an operation unit 44 for the operator to perform various operations are provided.

As an operation unit 44, a steering wheel 22 for the operator to steer, a changeover switch (not shown), a speed setting volume (not shown), and the like can be listed. The changeover switch is a switch operated by the operator to switch the steering mode of the traveling machine 10 between an automatic steering mode and a manual steering mode in response to the operation by the operator.

The automatic steering mode is a steering mode in which the traveling machine 10 is automatically steered (by the traveling machine control unit 40 described below). The manual steering mode is a steering mode in which the traveling machine 10 is steered in response to a manual operation of the steering wheel 22 by the operator.

The operation by the operator to switch from the manual steering mode to the automatic steering mode is called an automatic steering starting operation. The operation by the operator to switch the steering mode of the traveling machine 10 from the manual steering mode to the automatic steering mode is called an automatic steering cancel operation. In addition to the operation of the changeover switch, the steering mode of the traveling machine 10 can be switched from the automatic steering mode to the manual steering mode by operation of the steering wheel 22 by the operator.

Regardless of whether the steering mode of the traveling machine 10 is the automatic steering mode or the manual steering mode, the vehicle speed of the work vehicle 2 can be set by an operation of the speed setting volume.

A chassis 25 of the traveling machine 10 is provided in a lower part of the traveling machine body 12. The chassis 25 comprises a machine body frame 26, a transmission 27, a front axle 28, a rear axle 29, and the like.

The machine body frame 26 is a support member in a front part of the traveling machine 10 to support the engine 20 directly or through a vibration-proof member or the like. The power from the engine 20 is changed by the transmission 27 and transmitted to the front axle 28 and the rear axle 29. The front axle 28 transmits the power input by the transmission 27 to the front wheels 17. The rear axle 29 transmits the power input by the transmission 27 to the rear wheels 18.

Apart of the driving power of the engine 20 is transmitted to the work machine 11 via a PTO shaft (not shown). The work machine 11 can perform the tilling work by the driving power of the engine 20 transmitted via the PTO shaft. On the lower part of the work machine 11, tilling claws 31 are arranged to be rotationally driven about a horizontally arranged shaft 30.

By lowering the work machine 11 to a lower position at which the rotating tilling claws 31 contact the ground of the field F, the field F can be tilled at a predetermined depth corresponding to the working height. The tilling work can be stopped by stopping the rotation of the tilling claws 31 or raising the work machine 11 to an upper position (the position shown in FIG. 1) at which the rotating tilling claws 31 leave the ground of the field F. In other words, by raising and lowering the work machine 11, the state of the work machine 11 can be switched to either a working state in which tilling work is performed by the work machine 11 or a non-working state in which no tilling work is performed by the work machine 11. Even if the work machine 11 is other than a tilling machine, the state of the work machine can be switched between the working state and the non-working state by raising and lowering the work machine.

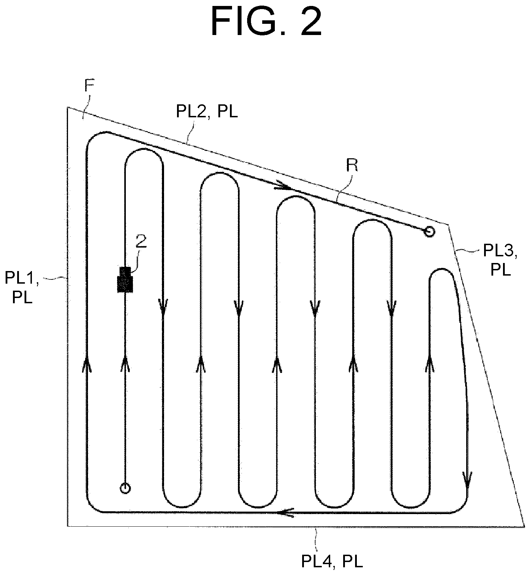

FIG. 2 is a schematic diagram explaining how the work vehicle 2 travels inside the field F. FIG. 2 shows a travel path R of the work vehicle 2 that travels while working in the field F.

Referring to FIG. 2, the work vehicle 2 meanders through the field F and then moves around the vicinity of outer peripheries PL (outer peripheries PL1, PL2, PL3, PL4) of the field F.

In detail, the work vehicle 2 firstly works while automatically moving straight ahead from one end of one of the outer peripheries PL (e.g., the outer periphery PL1) to the other end thereof, and then turns without working when it reaches the vicinity of the outer periphery PL2 connected to the other end of the outer periphery PL1. Automatic straight movement means that the work vehicle 2 is moved straight ahead in a state in which the steering mode is set to the automatic steering mode (automatic steering state).

The work vehicle 2 then works while automatically moving straight ahead in the opposite direction from the previous direction. In other words, the work vehicle 2 works while automatically moving straight ahead from the other end of the outer periphery PL1 to the one end. When the work vehicle 2 reaches the vicinity of the outer periphery PL4 that is connected to one end of the outer periphery PL1, it turns without working.

The work vehicle 2 moves from the vicinity of the outer periphery PL1 to the vicinity of the outer periphery PL3 opposite to the outer periphery PL1 by repeating the automatic straight-ahead movement and the turn, and then moves around the vicinity of the plurality of outer peripheries PL while working. In this way, the work in the field F is completed.

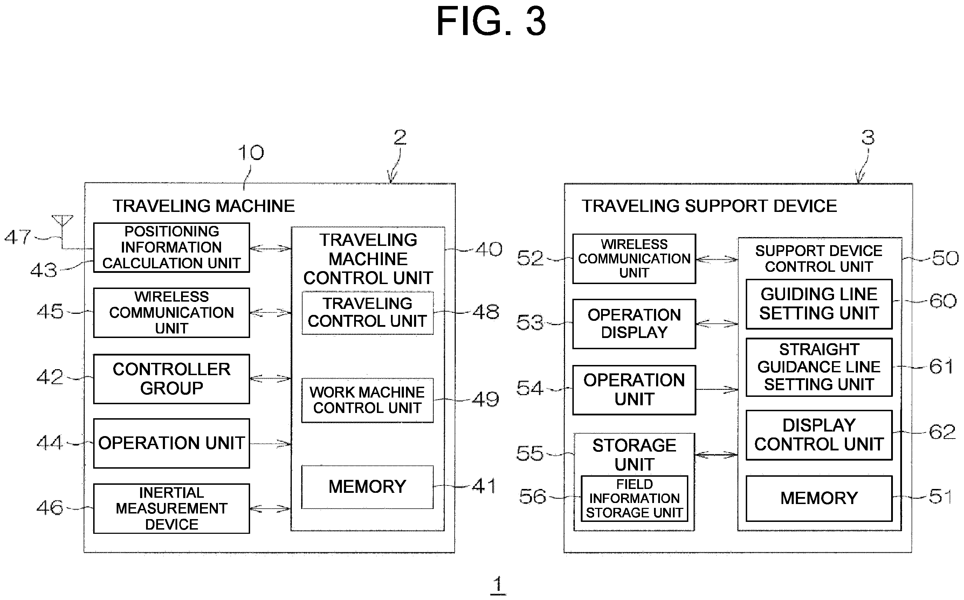

FIG. 3 is a block diagram illustrating the electrical configuration of the traveling support system 1.

In FIG. 3, the traveling machine 10 comprises a control unit (hereinafter referred to as "traveling machine control unit 40"). The traveling machine control unit 40 comprises a microcomputer equipped with a CPU and a memory 41 (a volatile memory, a non-volatile memory, etc.). The traveling machine control unit 40 controls movements of the traveling machine 10 (movements such as forward movement, backward movement, stopping, turning, etc.).

A plurality of controllers (controller group 42), a positioning information calculation unit 43, an operation unit 44, a wireless communication unit 45, and an inertial measurement device 46 are electrically connected to the traveling machine control unit 40.

A plurality of controllers control the various parts of the traveling machine 10. The plurality of controllers comprises an engine controller for controlling rotating speed of the engine 20 (See FIG. 1) and the like, a vehicle speed controller for controlling a vehicle speed of the traveling machine 10, a steering controller for controlling a steering angle of the front wheels 17 of the traveling machine 10, a lifting controller for lifting and lowering the work machine 11 by controlling a lifting cylinder (not illustrated), and a PTO controller for controlling a rotation of a PTO shaft, etc.

The positioning information calculation unit 43 is electrically connected to a satellite signal receiving antenna 47 mounted on the work vehicle 2 (traveling machine 10). The satellite signal receiving antenna 47 receives a signal from a positioning satellite which constitutes a satellite positioning system. The satellite signal receiving antenna 47 is mounted on the ceiling of a cabin 21 of the traveling machine 10 (See FIG. 1). The satellite positioning system is GNSS (Global Navigation Satellite System), for example. The positioning signals received by the satellite signal receiving antenna 47 are input into the positioning information calculation unit 43.

The positioning information calculation unit 43 calculates positioning information of the work vehicle 2 at a predetermined time interval (e.g., one second interval). The positioning information includes position information (e.g., latitude and longitude information) of the work vehicle 2 (strictly speaking, the satellite signal receiving antenna 47) and time information corresponding to the positioning information. The traveling machine control unit 40 obtains the positioning information from the positioning information calculation unit 43.

The inertial measurement device 46 is a sensor unit capable of determining the position (direction of the traveling machine 10), the acceleration, and the like of the work vehicle 2. Specifically, the inertial measurement device 46 comprise a group of sensors having an angular velocity sensor and an acceleration sensor attached to a first shaft, a second shaft, and a third shaft orthogonal to each another, respectively.

The traveling machine control unit 40 transmits position information to the traveling support device 3 at a predetermined time interval (e.g., one second interval) from the time when the engine 20 is started to the time when the engine 20 is stopped.

The traveling support device 3 comprises a control unit, hereinafter referred to as a "support device control unit 50," that controls the traveling support device 3. The support device control unit 50 comprises a microcomputer equipped with a CPU and a memory (a volatile memory, a non-volatile memory, etc.) 51. A wireless communication unit 52, an operation display 53, an operation unit 54 and a storage unit 55 are electrically connected to the support device control unit 50.

The wireless communication unit 52 is a communication interface for the support device control unit 50 to wirelessly communicate with the work vehicle 2. The operation display 53 is a touch panel display, for example. The operation unit 54 is, for example, an operation button. The storage unit 55 comprises a storage device such as a hard disk, a non-volatile memory, or the like.

As shown in FIG. 2, when the shape of the field F is not rectangular or square but quadrangular and the outer peripheries PL facing each other are not parallel to each other, positions suitable for starting a turn are not horizontally aligned with each other but differ from each other for each straight traveling. Therefore, it is difficult to start turning the work vehicle 2 at an appropriate timing after each straight traveling.

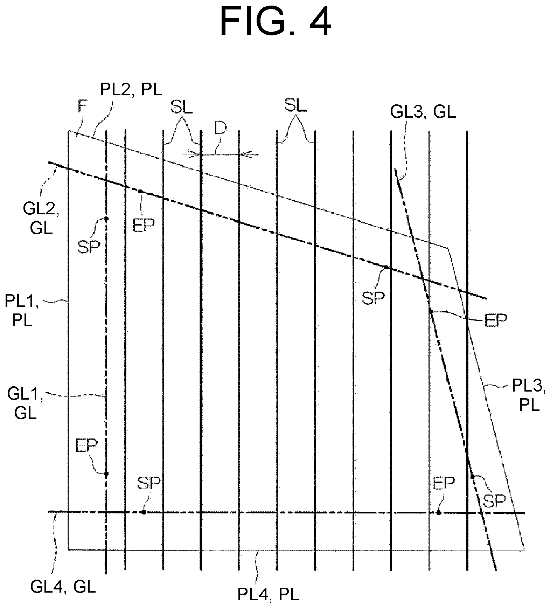

Therefore, in this embodiment, as shown in FIG. 4, a plurality of straight guidance lines SL extending parallel to one of the plurality of the outer peripheries PL (e.g., outer periphery PL1) and extending parallel to each other at a certain interval D, and a plurality of guiding lines GL, respectively extending parallel to the plurality of outer peripheries PL (guiding lines GL1, GL2, GL3 and GL4) within the field F, are set in the field F.

As shown in FIG. 3, the support device control unit 50 comprises a guiding line setting unit 60 for setting a plurality of guiding lines GL in the field F, and a straight guidance line setting unit 61 for setting a plurality of straight guidance lines SL in the field F.

For example, the guiding line setting unit 60 sets an extended line of a straight line obtained by displacing the outer peripheries PL of the field F (registered field) to the inside of the field F, which is registered in advance in the traveling support device 3, as the guiding line GL. If the position information of the field F is not registered, the operator needs to have the work vehicle 2 move around the vicinity of the outer periphery PL of the field F in advance before working in the field F. The guiding line setting unit 60 sets the guiding line GL based on a travel trajectory obtained when the work vehicle 2 moves around the vicinity of the outer periphery PL in advance. Specifically, the guiding line setting unit 60 defines the guiding line GL as an extended line of the straight line connecting a position SP (see FIG. 4) at which straight travel along the outer periphery PL is started and a position EP (see FIG. 4) at which straight travel along the outer periphery PL is terminated.

For example, the straight guidance line setting unit 61 sets a plurality of straight guidance lines SL by displacing the outer periphery PL of the field F (registered field), which is registered in advance in the traveling support device 3, to the inner side of the field F. The straight guidance line setting unit 61 may set the guiding line GL that is set on the basis of a travel trajectory obtained when the work vehicle 2 moves around the vicinity of the outer periphery PL in advance and the extended line of the straight line obtained by displacing the guiding line GL, as the straight guidance line SL.

The storage unit 55 comprises a field information storage unit 56 that stores information about the field F (field information). The field information includes position information of the plurality of outer peripheries PL of the field F, guiding lines GL and straight guidance lines SL set in the field F, and the like. The field F, for which the position information of the outer peripheries PL are stored, is called as a registered field.

The automatic steering starting operation as described above can be performed only when the traveling machine 10 is located on the straight guidance line SL and the orientation of the traveling machine 10 detected by the inertial measurement device 46 is parallel to the straight guidance line SL.

The traveling machine control unit 40 comprises a traveling control unit 48 that automatically makes the work vehicle 2 move straight ahead in response to an automatic steering starting operation and cancels the automatic straight-ahead movement in response to an automatic steering cancel operation to enable manual steering of the work vehicle 2. The traveling control unit 48 automatically makes the work vehicle 2 move straight ahead based on the position information obtained from the positioning information calculation unit 43. The traveling machine control unit 40 comprises a work machine control unit 49 for controlling the lifting controller which moves the work machine 11 to a lower position when the work vehicle 2 is automatically moving straight ahead, and moves the work machine 11 to an upper position when the automatic straight-ahead movement of the work vehicle 2 is cancelled. In other words, the work by the work machine 11 is automatically started when the automatic straight movement of the work vehicle 2 is started, and the work by the work machine 11 is automatically terminated when the automatic straight-ahead movement of the work vehicle 2 is cancelled.

The support device control unit 50 further includes a display control unit 62 that controls the contents displayed on the operation display 53. The display contents of the operation display 53 is controlled by the display control unit 62, so that the plurality of guiding lines GL, the plurality of straight guidance lines SL, the current position of the work vehicle 2, and the like are displayed in a superimposed way on the operation display 53 together with the shape of the field F.

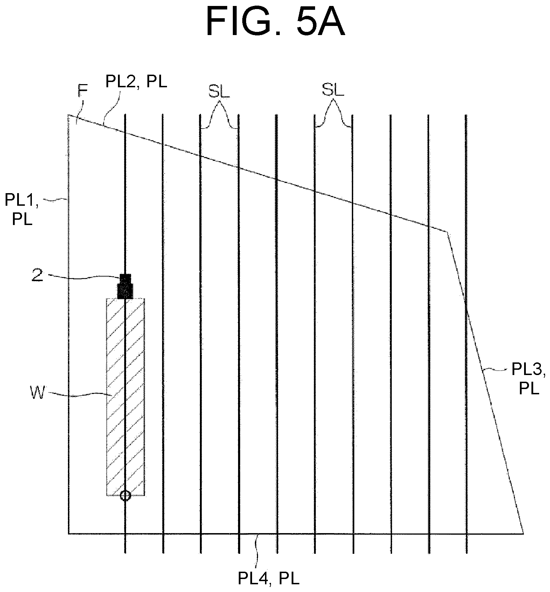

With reference to FIGS. 5A to 5E, it will be described how display contents shown on the operation display 53 are changed. On the operation display 53, the worked area W in which the work vehicle 2 has worked while traveling in the field F is displayed so that it can be distinguished from other parts of the field. FIGS. 5A to 5E show a schematic diagram of an image displayed on the operation display 53 when the work vehicle 2 travels in the field.

As shown in FIG. 5A, while traveling on a straight guidance line SL, the plurality of straight guidance lines SL, the current position of the work vehicle 2, and the like are displayed in a superimposed way on the display along with the shape of the field F.

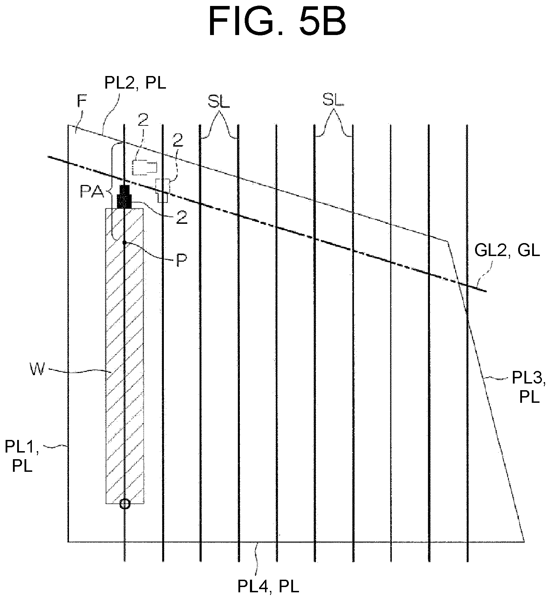

As shown in FIG. 5B, when the work vehicle 2 enters the outer peripheral proximity area PA set in the outer periphery PL2, the guiding line GL2 set for the outer periphery PL2 is displayed in a superimposed way on the operation display 53. The outer peripheral proximity area PA is an area between the outer peripheral proximity position P and the outer periphery PL2. The outer peripheral proximity position P is a position that is more distant from the outer periphery PL2 than the guiding line GL2. In FIG. 5B, the position of the work vehicle 2 during a turn is shown by a double-dotted line. The guiding line GL2 is continuously displayed while the work vehicle 2 is turning. The color of the guiding line GL is different from the color of the straight guidance line SL.

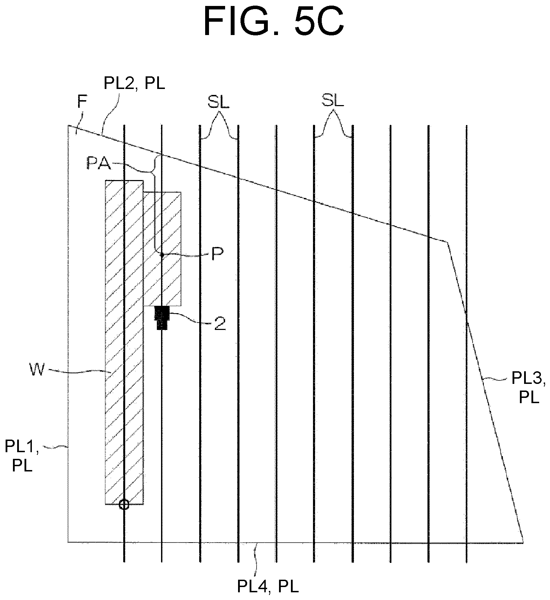

As shown in FIG. 5C, the display of the guiding line GL2 set for the outer periphery PL2 is cancelled when the work vehicle 2 turns after terminating traveling on the straight guidance line SL and starts traveling straight ahead on the adjacent straight guidance line SL, and then leaves the outer peripheral proximity area PA.

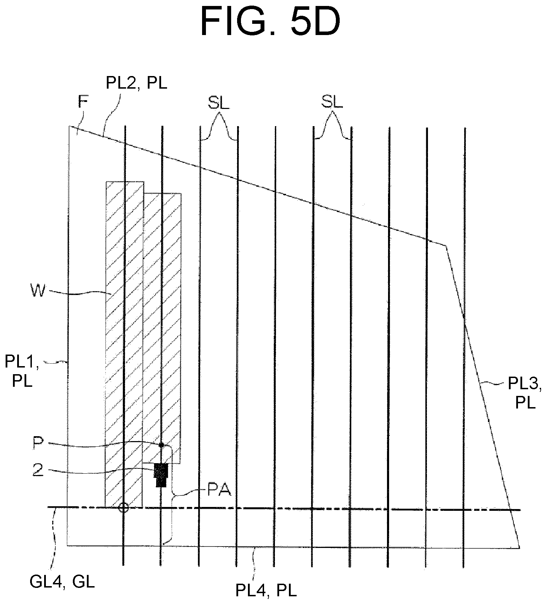

Contrarily, as shown in FIG. 5D, when the work vehicle 2 enters the outer peripheral proximity area PA set in the outer periphery PL4, the guiding line GL set for the outer periphery PL4 is displayed in the superimposed way on the operation display 53. The outer peripheral proximity area PA set in the outer periphery PL4 is an area between the outer peripheral proximity position P and the outer periphery PL4, which is more distant from the outer periphery PL4 than the guiding line GL4.

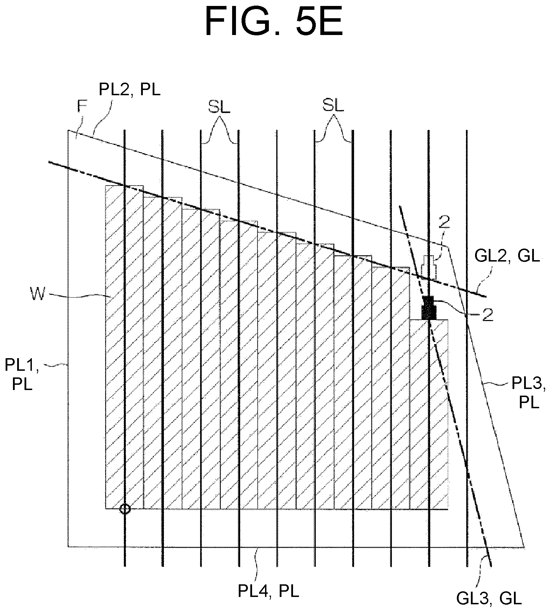

As shown in FIG. 5E, if the outer periphery PL3 is not parallel to the straight guidance line SL (outer periphery PL1), the guiding line GL3 corresponding to the outer periphery PL3 is displayed when the work vehicle 2 approaches the outer periphery PL3,. In the image shown in FIG. 5E, both the guiding line GL2 corresponding to the outer periphery PL2 and the guiding line GL3 corresponding to the outer periphery PL3 are displayed. The guiding lines GL are displayed with a different color for each corresponding outer periphery PL. In FIG. 5E, the work vehicle 2 located at the intersection of the guiding line GL2 corresponding to the outer periphery PL2 and the straight guidance line SL is shown by a double-dotted line.

According to this embodiment, the shape of the field F, the guiding lines GL, the straight guidance lines SL and the present position of the work vehicle 2 are displayed in a superimposed way on the operation display 53. The guiding lines GL extend parallel to the outer peripheries PL sectioning the field F. As a result, it is possible to turn the work vehicle 2 at a position at a certain distance from the outer periphery PL of the field F regardless of the shape of the field F if the automatic straight-ahead movement is cancelled by the operator operating the steering wheel 22 or the changeover switch at the timing when the current position of the work vehicle 2 overlaps the guiding line GL during the automatic straight-ahead movement of the work vehicle 2 along the straight guidance line SL. Accordingly, the operator can be aware of the appropriate timing for turning.

The timing at which the current position of the work vehicle 2 overlaps the guiding line GL is also the timing at which the work vehicle 2 reaches the intersection of the guiding line GL and the straight guidance line SL.

According to this embodiment, the guiding line GL corresponding to the outer periphery PL is also displayed at the timing when the work vehicle 2 reaches the vicinity of the outer periphery PL. Therefore, the guiding line GL required at the timing for manually turning the work vehicle 2 can be displayed on the operation display 53. Accordingly, the operator can be aware of the appropriate timing for turning with more certainty.

According to this embodiment, the display of the guiding line GL set for the outer periphery PL corresponding to the outer peripheral proximity area PA is cancelled when the work vehicle 2 leaves the outer peripheral proximity area PA. Therefore, only the guiding lines GL required at the timing for manually turning the work vehicle 2 can be displayed on the operation display 53. Thus, the contents displayed on the operation display 53 can be easily viewed. Accordingly, the operator can be aware of the appropriate timing for turning with more certainty.

In this embodiment, the color of the straight guidance lines SL displayed on the operation display 53 is different from the color of the guiding lines GL displayed on the operation display 53. As a result, it is possible to avoid misreading of the guiding lines GL and the straight guidance lines SL. Accordingly, the operator can be aware of the appropriate timing for turning with more certainty.

As a result, the work by the work machine 11 can be automatically started by starting the automatic straight-ahead movement of the work vehicle 2, and the work by the work machine 11 can be automatically terminated at a position at a certain distance from the outer periphery PL of the field F if the automatic straight-ahead movement is cancelled by the operator operating the steering wheel 22 or the changeover switch at the timing when the current position of the work vehicle 2 overlaps the guiding line GL regardless of the shape of the field F. Therefore, the position in the straight guidance line SL, at which the work is terminated, can be aligned at a certain distance from the outer periphery PL of the field F.

When the peripheries PL facing each other to form a rectangular are not parallel to each other, as shown in FIG. 5E, guiding lines GL (GL2, GL3) corresponding to the plurality of outer peripheries PL (PL2, PL3) may be displayed on the operation display 53. In this case, the operator can select the timing when the current position of the work vehicle 2 overlaps with one of the guiding lines GL to turn the work vehicle 2. Accordingly, the work vehicle 2 can be manually turned by appropriately selecting the most suitable guiding line GL, depending on the ground condition in the field F or the like.

The present invention is not limited to the embodiments explained above and can further be implemented in other forms.

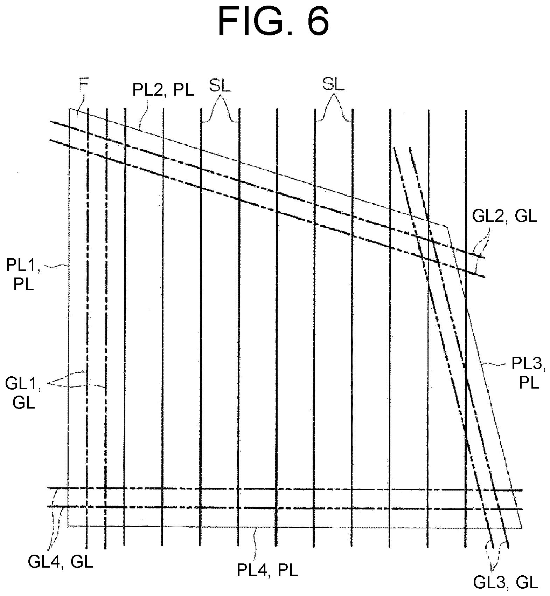

For example, as shown in FIG. 6, a plurality of guiding lines GL may be set for each outer periphery PL. In this case, as the work vehicle 2 enters the outer peripheral proximity area PA (see FIG. 5B), the plurality of guiding lines GL are displayed on the operation display 53. Accordingly, the work vehicle 2 can be manually turned by appropriately selecting the most suitable guiding line GL, depending on the ground condition in the field F or the like.

Various other changes can be made within the scope of the claims.

### [Appendix of the Invention]

According to an embodiment of the present invention, a traveling support system is provided, comprising: a guiding line setting unit setting a plurality of guiding lines in a field, the guiding lines respectively extending parallel to a plurality of outer peripheries sectioning the field; a straight guidance line setting unit setting a plurality of straight guidance lines in the field, the straight guidance lines extending parallel to each other at intervals; a traveling control unit automatically making the traveling vehicle move straight ahead along the straight guidance lines and cancelling the automatic straight-ahead movement in response to an operation of an operation unit provided on the traveling vehicle to enable manual steering of the traveling vehicle; and a display unit displaying a plurality of the guiding lines, a plurality of the straight guidance lines, and a current position of the traveling vehicle in a superimposed way together with the shape of the field.

According to this embodiment, the shape of the field, the guiding lines, the straight guidance lines SL and the present position of the work vehicle are displayed in a superimposed way on the operation display. The guiding lines extend parallel to the outer peripheries sectioning the field F. As a result, it is possible to turn the work vehicle at a position at a certain distance from the outer periphery of the field regardless of the shape of the field if the automatic straight-ahead movement is cancelled by the operator operating the operation unit at the timing when the current position of the work vehicle overlaps the guiding line during the automatic straight-ahead movement of the work vehicle along the straight guidance line. Accordingly, the operator can be aware of the appropriate timing for turning.

In one embodiment of the invention, the traveling support system further comprises a display control unit displaying the guiding line set for the outer periphery on the display unit when the traveling vehicle enters the outer peripheral proximity area between the outer periphery and the outer peripheral proximity position that is more distant from the outer periphery than the guiding line.

According to this embodiment, the guiding line corresponding to the outer periphery is displayed at the timing when the work vehicle reaches the vicinity of the outer periphery. As a result, the guiding line required at the timing for manually turning the work vehicle can be displayed on the operation display. Accordingly, the operator can be aware of the appropriate timing for turning with more certainty.

In an embodiment of the invention, the guiding line setting unit sets the plurality of the guiding lines for each outer periphery. When the traveling vehicle enters the outer peripheral proximity area, the display control unit displays the plurality of the guiding lines set for the outer periphery corresponding to the outer peripheral proximity area on the display unit.

According to this embodiment, as the work vehicle enters the outer peripheral proximity area, the plurality of guiding lines are displayed on the operation display. Accordingly, the traveling vehicle can be manually turned by appropriately selecting the most suitable guiding line, depending on the ground condition in the field or the like.

In one embodiment of the invention, when the traveling vehicle leaves the outer peripheral proximity area, the display control unit cancels the display of the plurality of the guiding lines set for the outer periphery corresponding to the outer peripheral proximity area on the display unit. As a result, only the guiding lines required at the timing for manually turning the work vehicle can be displayed on the operation display. Thus, the contents displayed on the operation display can be easily viewed. Accordingly, the operator can be aware of the appropriate timing for turning with more certainty.

In one embodiment of the invention, the color of the straight guidance line displayed on the operation display is different from the color of the guiding line displayed on the operation display. As a result, it is possible to avoid misreading of the guiding line and the straight guidance line SL. Accordingly, the operator can be aware of the appropriate timing for turning with more certainty.

In one embodiment of the invention, the traveling vehicle is equipped with a work machine which goes up and down between a lower position at which work is performed on the field and an upper position at which no work is performed on the field. The traveling machine control unit further comprises a work machine control unit that moves the work machine to a lower position when the traveling vehicle is automatically moving straight ahead and moves the work machine to an upper position when the straight movement of the traveling vehicle is cancelled.

As a result, the work by the work machine can be automatically started by starting the automatic straight-ahead movement of the work vehicle, and the work by the work machine can be automatically terminated at a position at a certain distance from the outer periphery of the field if the automatic straight-ahead movement is cancelled by the operator operating the operation unit at the timing when the current position of the work vehicle overlaps the guiding line regardless of the shape of the field. Therefore, the position in the straight guidance line at which the work is terminated, can be aligned at a certain distance from the outer periphery PL of the field F.

## Claims

1. A traveling support system comprising:
a guiding line setting unit setting a plurality of guiding lines in a field, the guiding lines respectively extending parallel to a plurality of outer peripheries sectioning the field;
a straight guidance line setting unit setting a plurality of straight guidance lines in the field, the straight guidance lines extending parallel to each other at intervals;
a traveling control unit making the traveling vehicle automatically move straight ahead along the straight guidance lines and cancelling the automatic straight-ahead movement in response to an operation of an operation unit provided on the traveling vehicle to enable manual steering of the traveling vehicle; and
a display unit displaying the plurality of the guiding lines, the plurality of the straight guidance lines, and a current position of the traveling vehicle in a superimposed way together with a shape of the field.

2. The traveling support system according to claim 1, further comprising a display control unit displaying the guiding line set for an outer periphery on the display unit when the traveling vehicle enters an outer peripheral proximity area between the outer periphery and an outer peripheral proximity position that is more distant from the outer periphery than the guiding line.

3. The traveling support system according to claim 2, wherein
the guiding line setting unit sets the guiding lines for each of the outer peripheries, and
the display control unit displays, on the display unit, the plurality of the guiding lines set for the outer periphery corresponding to the outer peripheral proximity area when the traveling vehicle enters the outer peripheral proximity area.

4. The traveling support system according to claim 2 or 3, wherein
the display control unit cancels the display of the guiding lines set for the outer periphery corresponding to the outer peripheral proximity area when the traveling vehicle leaves the outer peripheral proximity area.

5. The traveling support system according to any one of claims 1 to 4, wherein
a color of the straight guidance lines displayed on the display unit is different from a color of the guiding lines displayed on the display unit.

6. The traveling support system according to any one of claims 1 to 5, wherein
the traveling vehicle is equipped with a work machine which goes up and down between a lower position at which work is performed on the field and an upper position at which no work is performed on the field, and
the system further comprises a work machine control unit that moves the work machine to the lower position when the traveling vehicle is automatically moving straight ahead, and moves the work machine to the upper position when the straight movement of the traveling vehicle is cancelled.
